# DEMANDE DE BREVET EUROPEEN

(11) **EP 4 495 708 A1**
(43) Date de publication de la demande: **22.01.2025**
(21) Numéro de dépôt: 24183887.9
(22) Date de dépôt: 24.06.2024
(51) Int. Cl.: G04B 19/04, G01D 7/00, G01D 13/22, G04B 13/02

(54) **SYSTÈME DE FIXATION D'UN ÉLÉMENT D'AFFICHAGE**

(30) Priorité: 18.07.2023 EP 23186184
(71) Demandeur: ETA SA Manufacture Horlogère Suisse, 2540 Grenchen (CH)
(72) Inventeur: STARK, Stefan, 2515 Prêles (CH); MAHLER, Olivier, 2046 Fontaines (CH); GROSJEAN, Jérôme, 2542 Pieterlen (CH); KRAEHENBUEHL, David Benjamin, 2544 Bettlach (CH)
(74) Mandataire: ICB SA

(57) **Abrégé**

Un aspect de l'invention concerne un système de fixation (1) d'un élément d'affichage (2) sur un arbre d'entraînement (3) équipant un mécanisme d'affichage analogique d'un appareil de mesure, le système (1) comportant une portion de montage (6) de l'élément d'affichage (2) constituée d'un matériau ayant la propriété de se ramollir et d'un embout encastrable (4a) dudit arbre d'entraînement (3) configuré pour être incorporé par fusion dans ladite portion (4a), cet embout (4a) comprenant une partie d'une paroi périphérique (13) de l'arbre d'entraînement (3) pourvue d'une surface extérieure structurée de liaison configurée pour assurer un ancrage mécanique de cet embout (4a) dans ladite portion (6).

## Description

### Domaine technique de l'invention

L'invention se rapporte au domaine des appareils de mesure notamment au domaine de l'horlogerie, et en particulier au domaine des systèmes de fixation d'élément d'affichage tels qu'une aiguille d'affichage sur un arbre d'entraînement d'un mécanisme d'affichage.

L'invention concerne aussi un appareil de mesure tel qu'une pièce d'horlogerie comportant un tel élément d'affichage monté sur cet arbre d'entraînement à partir de ce système de fixation.

### Arrière-plan technologique

Dans l'état de la technique, les appareils de mesure tels que des pièces d'horlogerie comprennent des aiguilles horlogères qui sont fixées sur leur arbre d'entraînement à partir d'un système de fixation par chassage, c'est-à-dire qu'un cylindre creux, en l'occurrence le canon, est forcé sur un axe possédant un diamètre légèrement supérieur au diamètre intérieur du cylindre. Dans ce système, les propriétés élastiques et plastiques des matériaux employés, généralement un métal, sont utilisées pour ce chassage. Ainsi, il n'est possible de chasser un cylindre creux sur un arbre de rotation conventionnel tel que ceux qui sont utilisés dans l'horlogerie mécanique, qu'avec une différence de diamètre de quelques microns. De manière alternative, il n'est aussi possible de chasser ce cylindre creux de préférence circulaire droit, sur un arbre de rotation tronconique afin de limiter les forces de chasse trop élevées qui risquent de détériorer le mouvement lors de cette opération.

De plus, la fixation d'une aiguille doit fournir une force suffisante pour maintenir en place l'aiguille lors de chocs. La force nécessaire pour chasser une aiguille horlogère conventionnelle est par exemple de l'ordre de 30 N.

Pour résoudre ces problèmes, une solution consiste à réaliser des aiguilles avec un canon présentant une ou plusieurs fentes parallèles à l'axe de rotation et ouvertes au niveau de l'extrémité opposée de l'aiguille de manière que le canon se déforme élastiquement.

Toutefois un inconvénient majeur d'une telle solution réside dans le fait que ces fentes sur le canon affaiblissent ce dernier, ce qui implique la réalisation de fentes de largeur extrêmement faible pour ne pas trop affaiblir le canon. On mentionnera également que les opérations d'usinage sont complexes pour obtenir des fentes les plus fines possibles tout en respectant la largeur et la longueur pour obtenir la force de chassage désirée, ce qui implique une augmentation des coûts et du temps de production.

### Résumé de l'invention

L'invention a notamment pour but de pallier les différents inconvénients de l'état de la technique.

Un autre but de l'invention consiste à disposer d'un système de fixation améliorant la tenue d'un élément d'affichage ayant un corps non-métallique, donc insensible aux champs magnétiques, sur un arbre d'entraînement d'un mécanisme d'affichage d'un appareil de mesure.

Un autre but de l'invention est de fournir un système de fixation dans lequel l'élément d'affichage présente une masse et une inertie réduites, et dans toute forme souhaitée.

Un autre but de l'invention est de fournir un système de fixation dans lequel l'élément d'affichage est robuste dans le temps et dont le coût de fabrication est réduit.

Dans ce dessein un aspect de l'invention concerne un système de fixation d'un élément d'affichage sur un arbre d'entraînement équipant un mécanisme d'affichage analogique d'un appareil de mesure, le système comportant une portion de montage de l'élément d'affichage constituée d'un matériau ayant la propriété de se ramollir et d'un embout encastrable dudit arbre d'entraînement configuré pour être incorporé par fusion dans ladite portion, cet embout comprenant une partie d'une paroi périphérique de l'arbre d'entraînement pourvue d'une surface extérieure structurée de liaison configurée pour assurer un ancrage mécanique de cet embout dans ladite portion.

Dans d'autres modes de réalisation :
- la portion de montage comprend un canon dans lequel est aménagé un trou d'axe configuré pour monter l'élément d'affichage sur l'arbre d'entraînement ;
- l'embout encastrable est incorporé par fusion dans ledit canon ;
- la surface extérieure structurée comprend une pluralité de motifs en relief ;
- la pluralité de motifs en relief s'étend sur toute ou partie de la surface extérieure structurée ;
- la partie de la paroi périphérique dudit embout fait saillie de part et d'autre respectivement des faces opposées de la portion de montage dudit élément d'affichage ;
- le matériau susceptible de se ramollir comprend en tout ou partie une matière plastique ayant la propriété de se ramollir ;
- ledit embout comprend des première et deuxième parties faisant saillies respectivement des deux ouvertures opposées du trou d'axe du canon ;
- ledit embout encastrable est réalisé en un matériau présentant une température de ramollissement supérieure à une température de ramollissement du matériau constituant ladite portion de montage ;
- une zone d'assemblage de la portion de montage avec ledit embout dans laquelle les matériaux constituant respectivement ledit embout et ledit canon sont incorporés l'un dans l'autre par fusion ou intégration ou association notamment par fusion ou intégration ou association par ultrasons ;
- ledit élément d'affichage a un corps symétrique par rapport à un plan de symétrie longitudinal et/ou un plan de symétrie transversal ;
- ledit élément d'affichage est une aiguille d'affichage dont un corps comprend une planche pourvue de la zone d'assemblage.

Un autre aspect de l'invention concerne un appareil de mesure comportant au moins un tel élément d'affichage monté sur un embout encastrable d'un arbre d'entraînement à partir d'un tel système de fixation.

Avantageusement, un tel appareil est une pièce d'horlogerie.

### Brève description des figures

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue du système de fixation d'un élément d'affichage pour le montage de cet élément sur un embout encastrable d'un arbre d'entraînement équipant un mécanisme d'affichage d'un appareil de mesure, selon un mode de réalisation de l'invention ;
- la figure 2 est une vue de dessus du système de fixation dans lequel l'embout de l'arbre est incorporé dans ou intégré dans ou associé à un canon de l'élément d'affichage, selon le mode de réalisation de l'invention, et
- la figure 3 est une vue en coupe longitudinale selon la ligne III-III de ladite portion de montage de l'élément d'affichage représentée sur la figure 2, selon le mode de réalisation de l'invention.

### Description détaillée de l'invention

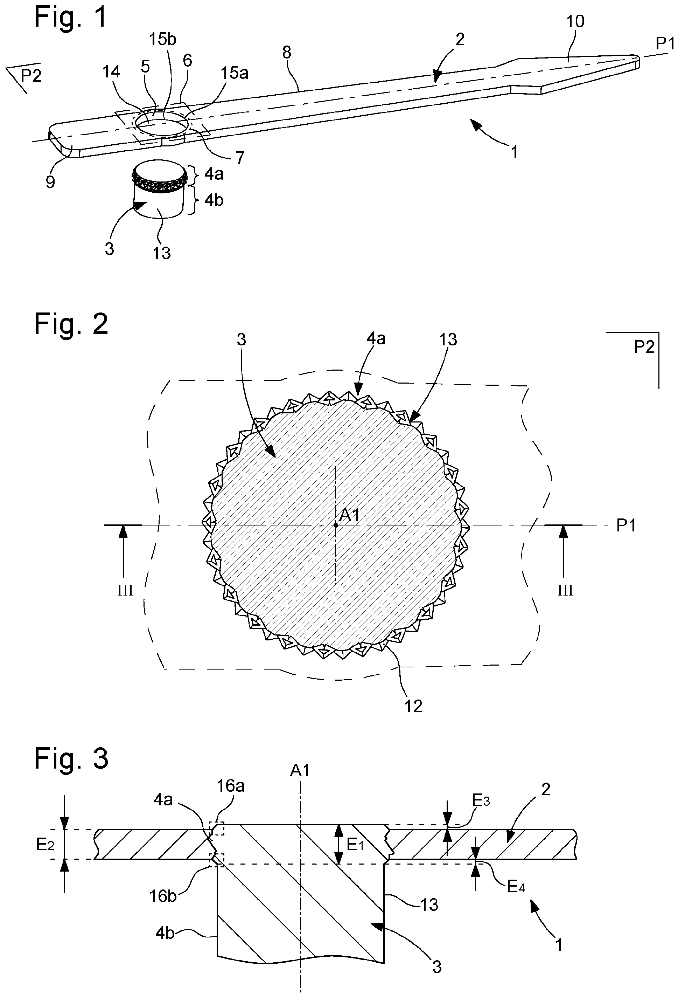

En référence aux figures 1 à 3, l'invention concerne un système de fixation 1 d'un élément d'affichage 2 sur un arbre d'entraînement 3 d'un mécanisme affichage analogique d'un appareil de mesure mécanique, électronique ou encore hybride. Cet appareil peut de manière non limitative et non exhaustive contribuer à mesurer la vitesse de déplacement d'un objet en étant un tachymètre, ou la pression atmosphérique en étant baromètre, ou encore le temps en étant une pièce d'horlogerie comme par exemple une montre-bracelet. On notera qu'un tel appareil de mesure, aussi appelé *« instrument de mesure* », peut être un objet portable.

En référence à la figure 1, ce système 1 comprend l'élément d'affichage 2 et en particulier une portion de montage 6 de cet élément 2 ainsi que l'arbre d'entraînement 3 et en particulier un embout 4a de cet arbre 3. Dans ce système 1, l'embout 4a et la portion 6 sont configurés pour coopérer ensemble afin d'assurer la fixation de l'élément d'affichage 2 sur l'arbre d'entraînement 3. Plus précisément, la portion 6 comprend un canon 14 dans lequel est aménagé un trou d'axe 5 configuré pour monter l'élément d'affichage 2 sur l'arbre d'entraînement 3. Autrement dit ce canon 14 et l'embout 4a sont configurés pour coopérer ensemble afin d'assurer la fixation de l'élément d'affichage 2 sur l'arbre d'entraînement 3.

Un tel l'élément d'affichage 2 également appelé « *indicateur d'affichage* » comprend un corps 8 pourvu d'une portion de montage 6 incluant une zone d'assemblage 7 comprenant le canon 14 dans ou auquel est susceptible d'être incorporé, ou intégré, ou associé l'arbre d'entraînement 3 d'un organe d'entraînement du mécanisme d'affichage. On notera que l'invention est applicable à des mécanismes d'affichage analogique pour une pièce d'horlogerie mécanique, électronique ou encore hybride.

Dans le mode réalisation du système de fixation 1, cet élément d'affichage 2 est de préférence une aiguille d'affichage 2. Toutefois, on comprend bien que cet élément d'affichage 2 n'est évidemment pas limité à être uniquement une aiguille 2 et qu'il peut être tout à fait différent de cette dernière en étant par exemple un disque. On notera par ailleurs que cet élément d'affichage 2 est décrit ici dans le cas particulier, mais non limitatif, d'un élément rotatif comme une aiguille 2 rotative. On notera néanmoins dans son principe, l'invention est aussi applicable à un élément d'affichage 2 doté d'une autre trajectoire de mobilité que circulaire, par exemple à un curseur linéaire, ou autre.

Par ailleurs, on notera que lorsque l'appareil de mesure est une pièce d'horlogerie, cette aiguille 2 est alors apte à être comprise dans le mécanisme d'affichage en étant une aiguille 2 des heures, des minutes ou encore des secondes en ayant une longueur variable, ou une extension radiale variable.

En référence à la figure 1, cette aiguille d'affichage 2 comprend un corps 8 formé par une planche 8 comportant une première extrémité pourvue d'un contrepoids 9 et une deuxième extrémité opposée incluant une pointe 10 indiquant une information comme par exemple une heure lorsque le mécanisme d'affichage est celui d'une pièce d'horlogerie. Dans cette planche 8, une telle pointe 10 a ici la forme d'un triangle mais pourrait prendre toute autre forme adéquate en vue d'indiquer une position angulaire déterminée sur un cadran de la pièce d'horlogerie. S'agissant, du contrepoids 9 il est de préférence de forme rectangulaire. Toutefois, ce dernier peut prendre toute autre forme, par exemple on pourrait imaginer que le contrepoids 9 prenne la forme d'un logo.

Dans cette aiguille 2, la planche 8 comporte aussi une tête située entre le contrepoids 9 et pointe 10 de l'aiguille 2. Une telle tête comprend la portion de montage 6 dans laquelle l'arbre d'entraînement 3 est susceptible d'être incorporé ou intégré en particulier dans le canon 14 de la zone d'assemblage 7 de cette portion 6. Une telle zone d'assemblage 7et donc le canon 14 comprend un trou d'axe 5 aussi appelé « *diamètre d'ajustement »* qui est prévu pour l'incorporation de l'embout encastrable 4a de l'arbre d'entraînement 3. On notera que ce trou d'axe 5 présente une surface qui est sensiblement inférieure à une section transversale de l'embout 4a encastrable. Par sensiblement inférieure, on entend « *strictement inférieure* » ou « *essentiellement inférieure* ». Ce trou d'axe 5 comporte deux ouvertures 15a, 15b opposées visible sur la figure 1.

Dans ce contexte, la planche 8 est réalisée en tout ou partie en un matériau ayant la propriété de se ramollir tel qu'un matériau plastique notamment thermoplastique. De préférence, un tel matériau est un matériau rigide ayant la propriété de se ramollir. Dans ces conditions, ce matériau peut donc être chauffé suffisamment pour se ramollir et redevenir rigide/dur en se refroidissant. Ce matériau plastique est composé de polymères à chaîne linéaire ou ramifiée qui sont aptes à se déformer et à être façonnées sous l'effet de la chaleur. Ce matériau plastique comprend par exemple des polymères thermoplastiques.

On comprend donc que cette planche 8 peut être réalisée uniquement ou entièrement en ce matériau pourvu de cette propriété de se ramollir. Alternativement, une telle planche 8 peut être en partie réalisée en ce matériau avec au moins la portion de montage 6 et donc le canon 14 qui est fabriqué en ce matériau.

Dans ce système 1, l'arbre d'entraînement 3 comprenant un axe de révolution A1 est aussi appelé « *arbre de rotation* » ou encore « axe *d'entraînement* ». Un tel arbre 3 comporte l'embout encastrable 4a qui est configuré pour être incorporé dans ou intégré dans ou associé au canon 14 de la zone d'assemblage 7 de cette portion de montage 6 de la planche 8 de cette aiguille 2. On notera que cet embout 4a est spécifiquement configuré pour venir se fixer ou s'ancrer dans cette zone 7.

Sur les figures 1 et 3, l'arbre d'entraînement 3 comprend une partie principale 4b qui est reliée à l'organe d'entraînement du mécanisme d'affichage et une extrémité libre qui forme l'embout encastrable 4a encore appelé « *pivot* » de cet arbre 3. Un tel embout 4a est de préférence venu de matière avec la partie principale 4b de l'arbre. Dans une variante, cet embout 4a peut être une pièce rapportée à cette partie principale 4b en étant assemblé à cette partie 4b de manière non limitative et non exhaustive par chassage, collage ou encore soudage.

Un tel embout encastrable 4a a une forme essentiellement cylindrique. On comprend bien sûr qu'elle peut se présenter sous d'autres formes. Un tel embout encastrable 4a est de préférence réalisé en un matériau présentant une température de ramollissement supérieure à celle du matériau constituant la portion de montage 6 et donc le canon 14 où il est susceptible d'être incorporé ou intégré ou associé. Un tel matériau est de préférence métallique tel que de l'aluminium, du laiton, de l'acier ou encore du titane. Dans une alternative, ce matériau peut aussi être un matériau thermodurcissable. On notera que la partie principale 4b de l'arbre est de préférence également réalisée en un même matériau que cet embout 4a. Dans une alternative, cette partie principale 4b peut être fabriquée en un matériau différent de celui de l'embout 4a, un tel matériau devant toutefois avoir une température de ramollissement sensiblement similaire à celle du matériau constituant cet embout encastrable 4a.

Par ailleurs, sur les figures 1 à 3, cet embout 4a comprend une partie de la paroi périphérique 13 de l'arbre 3 qui est pourvue d'une surface extérieure de liaison avec le canon 14 de cette portion de montage 6 de la planche 8, en particulier une surface extérieure structurée de liaison. Une telle surface extérieure structurée comprend une pluralité de motifs 12 en relief. Cette pluralité de motifs 12 s'étend de préférence sur toute la surface extérieure de cette partie de la paroi périphérique 13. De manière alternative, cette pluralité de motifs 12 peut être répartie sur des zones particulières de cette surface extérieure, lesquelles zones étant configurées pour coopérer avec le matériau constituant le canon de cette portion de montage 6 de la planche 8 de cette aiguille 2. On notera que ces motifs 12 peuvent être identiques c'est-à-dire avoir une forme tridimensionnelle similaire comme cela est visible sur la figure 2. On notera que cette forme tridimensionnelle est spécifiquement configurée pour assurer un ancrage mécanique robuste de l'embout 4a dans le canon 14 de cette zone d'assemblage 7 de la portion 6.

Une telle surface extérieure structurée contribue à augmenter la surface de contact de cet embout 4a avec le matériau utilisé dans le canon de cette portion de montage 6 de la planche 8. De plus dans cette configuration, le matériau peut s'insérer sur et entre les motifs 12 en relief de cette surface afin d'assurer un bon maintien de la planche 8 sur cet embout 4a. On comprend donc que la tenue de cet embout 4a dans ce canon 14 de cette portion 6 est alors améliorée et participe ainsi à assurer son ancrage mécanique de manière optimale dans ce canon 14.

Ainsi que nous l'avons évoqué, cet embout 4a de l'arbre 3 est encastré par intégration/association ou encore fusion dans le canon 14 de cette portion de montage 6 de la planche 8. Plus précisément, cet embout 4a est encastré dans ce canon 14 de cette portion 6 à partir d'une opération de fusion/intégration/association des matériaux constituant respectivement l'embout 4a de l'arbre 3 et le canon 14 de cette portion de montage 6. Une telle opération permet de ramollir le matériau constituant la portion 6 comprenant ce canon 14 par un apport d'énergie et ce, afin d'assurer l'introduction et l'ancrage de l'embout 4a dans cette portion de montage 6 et en particulier dans le canon 14 de la zone d'assemblage 7. Ainsi, dans cette zone d'assemblage 7 de la portion de montage 6 avec ledit embout 4a, les matériaux constituant respectivement ledit embout 4a et ladite portion 6 comprenant le canon 14, sont incorporés l'un dans l'autre par fusion ou intégration ou association grâce à cet apport en énergie. On notera qu'un tel apport en énergie peut être mise en oeuvre de manière non limitative et non exhaustive par ultrasons ou par un corps de chauffe, par un laser ou encore par un jet de vapeur.

Dans le cadre d'une mise en oeuvre par ultrasons, une telle opération peut être une opération de fusion/intégration/association par ultrasons. Cette opération permet de ramollir le matériau constituant la portion 6 comprenant le canon 14 en appliquant des vibrations mécaniques à ladite portion 6, lesdites vibrations mécaniques résultant des ultrasons. Dans ce contexte, ces vibrations mécaniques vont alors générer une chaleur de frottement dans la portion 6 en matériau ayant la propriété de se ramollir et exciter ses molécules qui vont à leur tour se mettre en mouvement. Ainsi, le matériau de cette portion 6 comprenant le canon 14 s'assouplit en se ramollissant permettant à l'embout 4a d'être introduit/encastré dans cette portion 6 et de se lier à ce matériau. En particulier cet embout 4a est alors encastré dans le trou d'axe 5 de la zone d'assemblage 7. Dans ce contexte, la zone d'assemblage 7 assure un serrage de cet embout 4a dans le canon 14 de cette portion de montage 6 et contribue ainsi à retenir axialement et en rotation l'aiguille 2 sur l'arbre d'entraînement 3.

Dans cette configuration où l'embout 4a est agencé dans la planche 8 de l'aiguille 2, on notera que la partie de la paroi périphérique 13 comprenant l'embout 4a fait saillie de part et d'autre respectivement des faces opposées de la portion 6 de ladite planche 8 de l'aiguille d'affichage 2. Ces deux faces opposées sont reliées entre elles par une paroi latérale de cette aiguille 2. Un tel agencement de l'embout 4a dans cette portion 6 participe à stabiliser l'aiguille d'affichage 2 axialement et en rotation.

Plus précisément, ledit embout 4a comprend des première et deuxième parties 16a, 16b qui font saillies respectivement des deux ouvertures 15a, 15b opposées du trou d'axe 5 du canon 14. Ces première et deuxième parties 16a, 16b délimitent la surface de l'embout 4a sur la paroi périphérique 13 de l'arbre d'entraînement 3. Dans cette configuration, ces première et deuxième parties 16a, 16b de l'embout 4a présentent des épaisseurs E3, E4 qui sont de préférence similaires. De telles épaisseurs E3, E4 sont inférieures à l'épaisseur :
- E1 de l'embout 4a ;
- E2 du canon 14.

Un tel agencement de l'embout 4a dans ce canon14 participe à stabiliser l'aiguille d'affichage 1 axialement et en rotation. De plus, cet agencement contribue à uniformiser la répartition des contraintes que peut subir l'aiguille 2 lors de son montage sur l'arbre d'entrainement et aussi après son montage sur cet arbre. Autrement dit de telles contraintes sont réparties uniformément sur toute l'épaisseur E2 du corps 8. Cette répartition uniforme permet d'assurer que le corps 8 de l'aiguille 2 et de la portion 6 comprenant le canon 14, restent plan. Ainsi, cet agencement permet de conserver la planéité du corps 8 de l'aiguille 2 après son montage sur l'arbre 3.

On comprend qu'un tel agencement de l'embout 4a dans le corps 8 de l'aiguille 2 autorise l'utilisation d'une plus grande palette de matériaux notamment en rendant plus nécessaire l'utilisation de matériaux qui soient expressément renforcés pour éviter des déformations de l'aiguille pouvant résulter de telles contraintes.

Par ailleurs, on remarquera que l'aiguille d'affichage 2 est symétrique par rapport à un plan de symétrie longitudinal P1 et/ou un plan de symétrie transversal P2 de cette aiguille 2. On comprend que ces deux plans P1, P2 sont perpendiculaires entre eux. En étant ainsi symétrique, une telle aiguille d'affichage 2 est alors réversible ce qui contribue à simplifier et à diminuer le temps de son montage dans un mécanisme d'affichage. Autrement dit, une telle aiguille d'affichage 2 peut être montée sur l'arbre 3 en présentant une face visible qui peut être n'importe laquelle de ses deux faces opposées.

La description qui précède correspond à un mode de réalisation préféré et ne saurait en aucun cas être considérée comme limitative, en ce qui concerne plus particulièrement le type d'élément d'affichage 2 mis en oeuvre dans ce système 1. En effet, d'autres éléments d'affichage comme des disques notamment des disques de quantièmes font aussi partie de l'invention.

Par ailleurs, cette description ne se limite pas non plus à la forme décrite pour les différents éléments structurels composant l'élément d'affichage 2 ou leurs matériaux. L'homme du métier ne rencontrera pas de difficulté particulière pour choisir, par exemple pour la planche 8 de l'aiguille 2, tout autre matériau présentant les propriétés mécaniques nécessaires à la mise en oeuvre de la présente invention.

Les applications possibles de ce système de fixation 1 de l'élément d'affichage 2 sont très nombreuses puisque la présente invention peut être mise en oeuvre pour dans type d'objet ou d'appareil, notamment portable, comprenant un élément d'affichage 2.

### Nomenclature

1. Système de fixation d'un élément d'affichage
2. Élément d'affichage
3. Arbre d'entraînement
4a. Embout encastrable de l'arbre d'entraînement
4b. Partie principale de l'arbre d'entraînement
5. Trou d'axe de l'élément d'affichage
6. Portion de montage de l'élément d'affichage
7. Zone d'assemblage de l'élément d'affichage
8. Corps de l'élément d'affichage ou planche de l'aiguille
9. Contrepoids de la planche
10. Pointe de la planche
12. Pluralité de motifs
13. Paroi périphérique de l'arbre d'entraînement
14. Canon du composant d'affichage
15a, 15b. Première et deuxième ouvertures du trou d'axe
16a, 16b. Première et deuxième parties faisant saillies du trou d'axe
A1. Axe de révolution de l'arbre d'entraînement
P1. Plan de symétrie longitudinal P1 de l'élément d'affichage/aiguille
P2. Plan de symétrie transversal P2 de l'élément d'affichage/aiguille

## Revendications

1. Système de fixation (1) d'un élément d'affichage (2) sur un arbre d'entraînement (3) équipant un mécanisme d'affichage analogique d'un appareil de mesure, le système (1) comportant une portion de montage (6) de l'élément d'affichage (2) constituée d'un matériau ayant la propriété de se ramollir et d'un embout encastrable (4a) dudit arbre d'entraînement (3) configuré pour être incorporé par fusion dans ladite portion (4a), cet embout (4a) comprenant une partie d'une paroi périphérique (13) de l'arbre d'entraînement (3) pourvue d'une surface extérieure structurée de liaison configurée pour assurer un ancrage mécanique de cet embout (4a) dans ladite portion (6).

2. Système (1) selon la revendication précédente, dans lequel la portion de montage (6) comprend un canon (14) dans lequel est aménagé un trou d'axe (5) configuré pour monter l'élément d'affichage (2) sur l'arbre d'entraînement (3).

3. Système (1) selon la revendication précédente, dans lequel l'embout encastrable (4a) est incorporé par fusion dans ledit canon (4).

4. Système (1) selon l'une quelconque des revendications précédentes, dans lequel ladite surface extérieure structurée comprend une pluralité de motifs (12) en relief.

5. Système (1) selon la revendication précédente, dans lequel la pluralité de motifs (12) en relief s'étend sur toute ou partie de la surface extérieure structurée.

6. Système (1) selon l'une quelconque des revendications précédentes, dans lequel la partie de la paroi périphérique (13) dudit embout (4a) fait saillie de part et d'autre respectivement des faces opposées de la portion de montage (6) dudit élément d'affichage (2).

7. Système (1) selon l'une quelconque des revendications précédentes, dans lequel ledit embout (4a) comprend des première et deuxième parties (16a, 16b) faisant saillies respectivement des deux ouvertures (15a, 15b) opposées du trou d'axe (5) du canon (14).

8. Système (1) selon l'une quelconque des revendications précédentes, dans lequel le matériau susceptible de se ramollir comprend en tout ou partie une matière plastique ayant la propriété de se ramollir.

9. Système (1) selon l'une quelconque des revendications précédentes, dans lequel ledit embout encastrable (4a) est réalisé en un matériau présentant une température de ramollissement supérieure à une température de ramollissement du matériau constituant ladite portion de montage (6).

10. Système (1) selon l'une quelconque des revendications précédentes, comprenant une zone d'assemblage (7) de la portion de montage (6) avec ledit embout (4a) dans laquelle les matériaux constituant respectivement ledit embout (4a) et ledit canon (14) sont incorporés l'un dans l'autre par fusion ou intégration ou association notamment par fusion ou intégration ou association par ultrasons.

11. Système (1) selon l'une quelconque des revendications précédentes, dans lequel ledit élément d'affichage (2) a un corps (8) symétrique par rapport à un plan de symétrie longitudinal (P1) et/ou un plan de symétrie transversal (P2).

12. Système (1) selon l'une quelconque des revendications précédentes, dans lequel ledit élément d'affichage (2) est une aiguille d'affichage (2) dont un corps (8) comprend une planche (8) pourvue de la zone d'assemblage (7).

13. Appareil de mesure comportant au moins un élément d'affichage (2) monté sur un embout encastrable (4a) d'un arbre d'entraînement (3) à partir d'un système de fixation (1) selon l'une quelconque des revendications précédentes.

14. Appareil selon la revendication précédente étant une pièce d'horlogerie.
